# EUROPEAN PATENT APPLICATION

(11) **EP 4 297 470 A1**
(43) Date of publication of application: **27.12.2023**
(21) Application number: 22755752.7
(22) Date of filing: 06.01.2022
(51) Int. Cl.: H04W 24/04, H04W 92/24, H04W 76/18, H04W 88/18

(54) **SERVER, REQUEST ENTITY, AND METHOD THEREFOR**

(30) Priority: 17.02.2021 JP 2021023807
(71) Applicant: NEC Corporation, 108-8001 Tokyo (JP)
(72) Inventor: TAKAKURA Tsuyoshi, Tokyo 110-0012 (JP); TAMURA Toshiyuki, Tokyo 108-8001 (JP)
(74) Representative: MacDougall, Alan John Shaw
(86) International application number: PCT/JP2022/000274
(87) International publication number: WO 2022/176426

(57) **Abstract**

In response to receiving from a requesting entity (2) a request for a connection to an entity providing a service in an edge data network (4), a first server (7) attempts to identify a second server (5) located in the edge data network (7) based on at least one selection criterion. If the second server (4) cannot be identified or is not available, the first server (7) identifies a second alternative server that is different from the second server, or identify a first alternative server that substitutes for the first server (7) for attempting to identify the second server. This can contribute, for example, to mitigating the impact of failing to discover one or more preferred edge servers for a User Equipment (UE).

## Description

### Technical Field

The present disclosure relates to radio communication networks, and in particular to devices and methods for edge computing.

### Background Art

Edge computing aims to move applications, data, and computing power (services) from centralized points (e.g., centralized data centers) to locations closer to users (e.g., distributed data centers). The Industry Specification Group called Multi-access Edge Computing (MEC) of the European Telecommunications Standards Institute (ETSI) has standardized an application platform and APIs for edge computing. For example, MEC provides application developers and content providers with cloud computing capabilities and information technology (IT) service environments within a Radio Access Network (RAN) in close proximity to mobile subscribers. This environment provides ultra-low latency and high bandwidth, as well as direct access to radio network information (radio network information generation) (e.g., subscriber location and cell load) that can be leveraged by applications and services.

The Third Generation Partnership Project (3GPP) SA6 working group has begun standardization work on an architecture for enabling Edge Applications. (See, for example, Non-Patent Literature 1). This 3GPP architecture is called the EDGEAPP architecture. The EDGEAPP architecture provides a specification of an enabling layer to facilitate communication between application clients (ACs) running on a User equipment (UE) and applications deployed at the edge. According to the EDGEAPP architecture, edge applications provided by Edge Application Servers (EASs) are provided to ACs in a UE by an Edge Configuration Server (ECS) and an Edge Enabler Server (EES) through an Edge Enabler Client (EEC) of that UE.

An AC running on a UE needs to discover a server application (i.e., EAS in 3GPP SA6 terminology, or MEC application in ETSI ISG MEC terminology) on the edge cloud. The AC can use another client on the UE, i.e., the EEC, for discovery of the server application. The EEC provides ACs with discovery of available EASs in the edge data network.

A UE is initially provisioned from an ECS with information required to connect to an Edge Data Network (EDN). The EDN includes one or more EESs and one or more EASs. More specifically, the EEC of the UE communicates with the ECS for service provisioning. Service provisioning allows configuring the EEC with information about available Edge Computing services, based on the UE location, service requirements, and connectivity. This configuration includes the necessary address information for the EEC to establish one or more connections with one or more EESs deployed in the EDN. The ECS identifies (or selects or determines) one or more EESs based on the UE location and, for example, based on one or more Application Client profiles provided by the EEC.

For this service provisioning, the EEC makes a service provisioning request to the ECS to request resources for providing services in the EDN and information about the connection or configuration. The information about the connection or configuration includes, for example, information about available edge computing services, information about a server in the EDN, identifier (ID) and address information (e.g., Internet Protocol (IP) address, Single-Network Slice Selection Assistance Information (S-NSSAI), and service area information) for that server, EDN configuration information, and configuration information about the Edge Data Network for the EEC to establish the connection.

The EEC then communicates with the EES to perform EAS discovery for the AC. EAS discovery allows the EEC to obtain information (EAS information) about EASs of interest that are available for the AC. The EES identifies (or selects, or determines, or discovers) one or more EASs based on the UE location and, for example, based on EAS discovery filters provided by the EEC. For EAS discovery, the EEC makes an EAS discovery request to the EES to request information about devices, connections, or configurations required to provide services in the EDN. Such information includes, for example, information about available edge computing services and information about servers in the EDN.

The entities that make service provisioning requests and/or EAS discovery requests are hereinafter collectively referred to as request entities. Service provisioning requests and EAS discovery requests (Edge Application Server discovery requests) are collectively referred to as simply "requests".

### Citation List

### Non Patent Literature

[Non-Patent Literature] 3GPP TS 23.558 V1.2.0 (2020-11) "3rd Generation Partnership Project; Technical Specification Group Services and System Aspects; Architecture for enabling Edge Applications; (Release 17)", November 2020

### Summary of Invention

### Technical Problem

As mentioned above, in the 3GPP EDGEAPP architecture, servers located in an edge data network (hereafter referred to as edge servers) include one or more EESs and one or more EASs. If a UE cannot obtain information on preferred or suitable edge servers via the enabling layer, the UE cannot use edge applications. More specifically, if the ECS cannot identify (or discover) a suitable EES for an AC, the AC cannot use edge applications. Similarly, if the ECS is able to discover an EES(s), but the EES is unable to identify (or discover) an appropriate EAS for the AC, the AC is unable to utilize the edge application.

The impact of these may be more severe when edge application mobility (or application context relocation) is needed for service continuity. Edge Application Mobility relocates the application context or application instance or both for a user (i.e., AC) from a source EAS (or EDN or LADN) to a target EAS (or EDN or LADN). Edge application mobility can be triggered by UE mobility events or non-UE mobility events. UE mobility events include, for example, intra-EDN UE mobility, inter-EDN UE mobility, and Local Area Data Network (LADN)-related UE mobility. Non-UE mobility events include, for example, EAS or EDN overload situations and EAS maintenance (e.g., graceful shutdown of an EAS).

One of the objects to be attained by example embodiments disclosed herein is to provide apparatuses, methods, and programs that contribute to mitigating the impact of failing to discover one or more preferred edge servers for a UE. It should be noted that this object is merely one of the objects to be attained by the example embodiments disclosed herein. Other objects or problems and novel features will be made apparent from the following description and the accompanying drawings.

### Solution to Problem

In a first aspect, a first server includes at least one memory and at least one processor coupled to the at least one memory. The at least one processor is configured to, in response to receiving from a requesting entity a request for a connection to an entity providing a service in an edge data network, attempt to identify a second server located in the edge data network based on at least one selection criterion. The at least one processor is configured to, if the second server cannot be identified or is not available, identify a second alternative server that is different from the second server, or identify a first alternative server that substitutes for the first server for attempting to identify the second server.

In a second aspect, a method performed by a first server includes the following steps:
(a) in response to receiving from a requesting entity a request for a connection to an entity providing a service in an edge data network, attempting to identify a second server located in the edge data network based on at least one selection criterion, wherein the at least one selection criterion includes a congestion state of a server located within the edge data network; and
(b) if the second server cannot be identified or is not available, identifying a second alternative server that is different from the second server, or identifying a first alternative server that substitutes for the first server for attempting to identify the second server.

In a third aspect, a requesting entity includes at least one memory and at least one processor coupled to the at least one memory. The at least one processor is configured to send to a first server a request for a connection to an entity providing a service in an edge data network, and receive a response to the request from the first server. The at least one processor is configured to, in a case where a second server that is located in the edge data network and that an attempt is made to identify based on at least one selection criterion cannot be identified, if the response includes information about a second alternative server that is different from the second server or information about a first alternative server that substitutes for the first server for attempting to identify the second server, decide whether to accept the information about the first alternative server or the information about the second alternative server for provision of the service.

In a fourth aspect, a method performed by a requesting entity includes the following steps:
(a) sending to a first server a request for a connection to an entity providing a service in an edge data network;
(b) receiving a response to the request from the first server; and
(c) in a case where a second server that is located in the edge data network and that an attempt is made to identify based on at least one selection criterion cannot be identified, and if the response includes information about a second alternative server that is different from the second server or information about a first alternative server that substitutes for the first server for attempting to identify the second server, deciding whether to accept the information about the first alternative server or the information about the second alternative server for provision of the service.

In a fifth aspect, a program includes a set of instructions (software codes) that, when loaded into a computer, cause the computer to perform the method according to the second or fourth aspect described above.

### Advantageous Effects of Invention

According to the above-described aspects, it is possible to provide apparatuses, methods, and programs that contribute to mitigating the impact of failing to discover one or more preferred edge servers for a UE.

### Brief Description of Drawings

Fig. 1 shows an example of the architecture of a network according to an example embodiment;
Fig. 2 is a flowchart showing an example of the operation of a first server according to an example embodiment;
Fig. 3 is a flowchart showing an example of the operation of a requesting entity according to an example embodiment;
Fig. 4 is a sequence diagram showing an example of the operations of an EEC and ECS according to an example embodiment;
Fig. 5 is a sequence diagram showing an example of the operations of an EEC and EES according to an example embodiment;
Fig. 6 is a sequence diagram showing an example of the operations of a source EES (S-EES) and ECS according to an example embodiment;
Fig. 7 is a sequence diagram showing an example of the operations of a source EES (S-EES) and target EES (T-EES) according to an example embodiment;
Fig. 8 is a flowchart showing an example of the operation of a first server according to an example embodiment;
Fig. 9 is a sequence diagram showing an example of the operations of an EEC, ECS, and EES according to an example embodiment;
Fig. 10 is a sequence diagram showing an example of the operations of an EEC, ECS, and EES according to an example embodiment;
Fig. 11 is a block diagram showing an example configuration of a UE according to an example embodiment; and
Fig. 12 is a block diagram showing an example configuration of a server according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

Each of the example embodiments described below may be used individually, or two or more of the example embodiments may be appropriately combined with one another. These example embodiments include novel features different from each other. Accordingly, these example embodiments contribute to attaining objects or solving problems different from one another and contribute to obtaining advantages different from one another.

The example embodiments presented below are described primarily for the 3GPP system (e.g., 5G system (5GS)). However, these example embodiments may be applied to other radio communication systems.

### First Example Embodiment

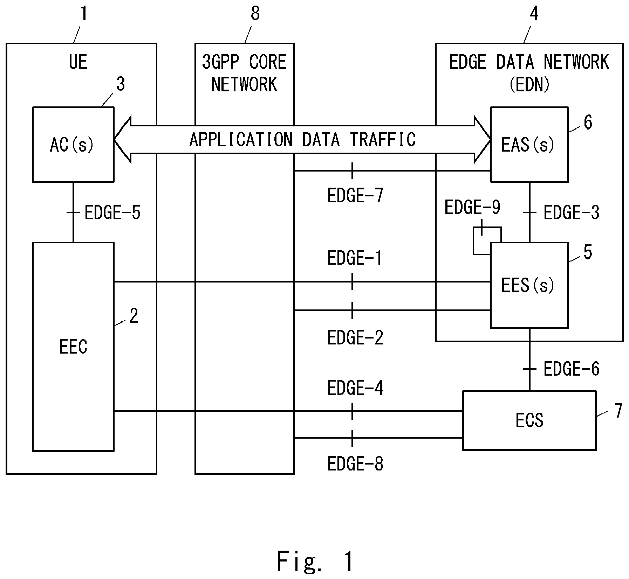

Fig. 1 shows an example of the architecture of a network according to this example embodiment. The architecture in Fig. 1 corresponds to the 3GPP EDGEAPP architecture. Each of the elements shown in Fig. 1 is a functional entity, providing functions and interfaces as defined by the 3GPP. Each of the elements (functional entities) shown in Fig. 1 can be implemented, for example, as a network element on dedicated hardware, as a software instance running on dedicated hardware, or as a virtualized function instantiated on an application platform.

In the example in Fig. 1, a User Equipment (UE) 1 includes an Edge Enabler Client (EEC) 2 and one or more Application Clients (ACs) 3. In other words, an EEC 2 and one or more ACs 3 are deployed in the UE 1 and run on the UE 1. Although not explicitly shown in Fig. 1, the UE 1 communicates with a 3GPP core networks (e.g., 5G Core (5GC)) via an access network (e.g., Radio Access Network (e.g., NG Radio Access Network (NG-RAN))). In this way, the UE 1 provides the EEC 2 and AC(s) 3 with connectivity to a data network via the access network and the 3GPP Core Network 8.

The EEC 2 provides supporting functions required by the AC(s) 3. Specifically, the EEC 2 provides provisioning of configuration information to enable the exchange of application data traffic with an Edge Application Server (EAS). In addition, the EEC 2 provides functions for a discovery of one or more EASs available within an Edge Data Network (EDN) 4. The EEC 2 uses EAS endpoint information obtained from the EAS discovery in routing of outgoing application data traffic to an EAS. Further, the EEC 2 provides functions for registration (i.e., registration, update, and de-registration) of an EES 5 and EAS(s) 6.

Each AC 3 is an application running on the UE 1. Each AC 3 connects to one or more EASs to utilize edge computing services and exchanges application data traffic with these EASs.

One Edge Data Network (EDN) 4 includes one or more Edge Enabler Servers (EES) 5 and one or more Edge Application Servers (EASs) 6. The EDN 4 may be a Local Area Data Network (LADN). An LADN allows limited access to a DN (and the corresponding Data Network Name (DNN)) only in one or more specific areas. Outside of these areas, the UE 1 cannot access the relevant DN (and DNN). An area where LADN DNN is available is called a LADN Service Area and is configured in the network as a set of Tracking Areas (TAs). DNNs that do not use LADN features do not have a LADN service area and are not restricted by those features. An LADN service area can be provided to the UE 1 by an Access and Mobility Management Function (AMF) in the 3GPP core network 8 when the UE 1 registers. This allows the UE 1 to know the area where the LADN (or EDN) is available and not attempt to access this LADN (or EDN) outside of this area.

Each EES 5 provides supporting functions required by an EAS(s) 6 and the EEC 2. Specifically, each EES 5 provides the EEC 2 with the provisioning of configuration information, thereby enabling the exchange of application data traffic with an EAS(s) 6. Each EES 5 provides functions for registration (i.e., registration, update, and de-registration) of the EEC 2 and EAS(s) 6. Each EES 5 provides functions of application context transfer between EESs. These functions are required for edge application mobility (or application context relocation) for service continuity. Edge Application Mobility relocates the application context or application instance or both for a user (i.e., AC) from a source EAS (or EDN or LADN) to a target EAS (or EDN or LADN). Edge application mobility can be triggered by UE mobility events or non-UE mobility events. UE mobility events include, for example, intra-EDN UE mobility, inter-EDN UE mobility, and LADN-related UE mobility. Non-UE mobility events include, for example, EAS or EDN overload situations and EAS maintenance (e.g., graceful shutdown of an EAS).

In addition, each EES 5 supports functionality of an Application Programming Interface (API) invoker and API exposing function. Each EES 5 may interact with the 3GPP Core Network 8 directly (e.g., via a Policy Control Function (PCF)) or indirectly (e.g., via a Network Exposure Function (NEF) or Service Capability Exposure Function (SCEF)) to access services and capabilities of network functions in the 3GPP Core Network 8. Each EES 5 may support external exposure of services and capabilities of 3GPP network functions to EAS(s) 6.

Each EAS 6 is located in the EDN 4 and performs server functions of an application. The server functions of an application may be available only at the edge. In other words, the server functions of an application may be available only as an EAS. However, the server functions of an application may be available both at the edge and in the cloud. In other words, the server functions of an application may be available as an EAS and in addition may be available as an application server in the cloud. The term "cloud" here means a central cloud located further away from the UE 1 than the EDN 4. Accordingly, an application server in the cloud means a server deployed in a centralized location (e.g., a centralized data center). Each EAS 6 may consume or utilize 3GPP core network capabilities. Each EAS 6 may directly invoke 3GPP Core Network function APIs. Alternatively, each EAS 6 may consume or utilize 3GPP core network capabilities via the EES 5, or via a NEF or SCEF.

The Edge Configuration Server (ECS) 7 provides supporting functions needed for the EEC 2 to connect with EES(s) 5. Specifically, the ECS 7 provides provisioning of edge configuration information to the EEC 2. The edge configuration information includes information for the EEC 2 to connect to EES(s) 5 (e.g., service area information applicable to an LADN) and information for establishing a connection with EES(s) 5 (e.g., Uniform Resource Identifier (URI)). The ECS 7 provides functions for registration (i.e., registration, update, and de-registration) of EES(s) 5. In addition, ECS 7 supports functionality of an API invoker and API exposing function. The ECS 7 may interact with the 3GPP Core Network 8 directly (e.g., via a PCF) or indirectly (e.g., via a NEF or SCEF) to access services and capabilities of network functions in the 3GPP Core Network 8. The ECS 7 may be deployed in the Mobile Network Operator (MNO) domain serving the 3GPP core network 8 or in a third-party domain by a service provider (e.g., an Edge Computing Service Provider (ECSP)).

The example configuration in Fig. 1 shows only representative elements for illustrative purposes. For example, the ECS 7 may be connected to multiple EDNs, including the EDN 4.

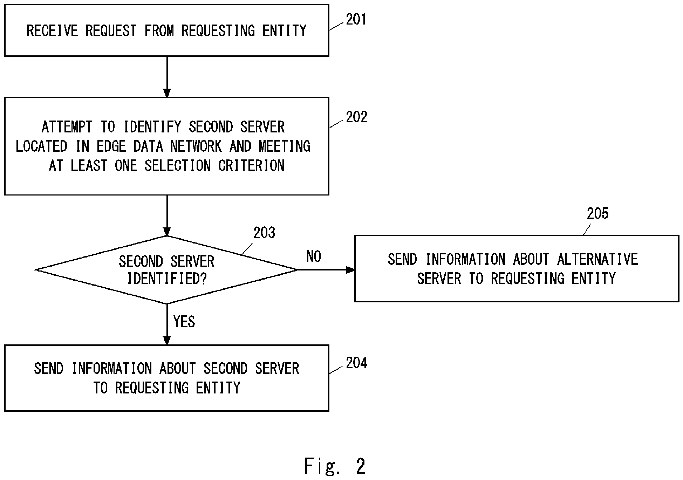

Fig. 2 is a flowchart showing an example of the operation of a first server according to this example embodiment. The first server attempts to identify (or discover, or select, or determine) a preferred or suitable edge server deployed in the EDN 4. In one example, the first server may be the ECS 7, which may attempt to identify one or more EESs in response to a request from the EEC 2 of the UE 1. Alternatively, the first server may be the ECS 7 and may attempt to identify a target EES (T-EES) upon request from a source EES (S-EES) during edge application mobility (or application context relocation). In another example, the first server may be an EES 5, which may attempt to identify one or more EASs in response to a request from the EEC 2 of the UE 1. Alternatively, the first server may be an EES 5 (T-EES) and may attempt to identify a target EAS (T-EAS) upon request from an S-EES during edge application mobility (or application context relocation).

In step 201, the first server receives a request from a requesting entity. The requesting entity may be a functional entity. In the case where the first server is the ECS 7, the requesting entity may be the EEC 2, or it may be an S-EES (e.g., EES 5) in edge application mobility. In the case where the first server is an EES 5, the requesting entity may be the EEC 2, or may be an S-EES in edge application mobility. The request requests a connection to an entity that provides a service in the edge data network. The request may be a service provisioning request or an EAS discovery request. The request may be an EEC registration request or an EEC registration update request.

In step 202, in response to receiving the request, the first server attempts to identify a second server that is located in the EDN 4 and meets at least one selection criterion. In the case of selection (or determination, or discovery, or identification) of an EES(s) by the ECS 7, second servers are EESs. Furthermore, in this case, one or more factors considered in the at least one selection criterion may include at least one of the following: the location of the UE 1, at least one Application Client profile provided by the EEC 2, the operational status of a second server (i.e., EES), the load status of a second server (i.e., EES). The ECS 7 may identify an EES(s) that match the provided Application Client profile(s). If multiple Application Client profiles are provided, the ECS 7 may identify an EES(s) that match all the Application Client profiles. Alternatively, the ECS 7 may identify an EES(s) that match at least one of the provided multiple Application Client profiles.

On the other hand, in the case of selection (or determination, or discovery, or identification) of an EAS(s) by the EES 5, second servers are EAS. Furthermore, in this case, one or more factors considered in the at least one selection criterion may include at least one of the following: the location of the UE 1, EAS discovery filters provided by the EEC 2, the operational status of a second server (i.e., EAS), or the load status of a second server (i.e., EAS). The List of Application Client characteristics contained in the EAS discovery filters may indicate multiple Application Clients (i.e., multiple Application Client Profiles). In this case, the EES 5 may identify an EAS(s) that matches all the Application Client profiles. Alternatively, the EES 5 may identify an EAS(s) that matches at least one of the provided Application Client profiles. Additionally or alternatively, the List of Edge Application Server characteristics contained in the EAS discovery filters may indicate multiple items. Each item in the list indicates a set of one or more characteristics (e.g., any combination of EAS type, EAS schedule, EAS Geographical Service Area, EAS Topological Service Area, Service continuity support, and EAS status). The EES 5 may identify an EAS(s) that matches all the items on the list. Alternatively, the ECS 7 may identify an EES(s) that matches at least one item on the list.

Upon successfully identifying a preferred or suitable second server that meets the selection criteria (YES in step 203), the procedure proceeds to step 204. In step 204, the first server (i.e., ECS 7 or EES 5) sends information on the identified second server (e.g., EES, EAS, T-EES, or T-EAS) to the requesting entity (i.e., EEC 2 or S-EES).

In contrast, upon failure to identify a preferred or suitable second server that meets the selection criteria (NO in step 203), the procedure proceeds to step 205. In step 205, the first server (i.e., ECS 7 or EES 5) sends information about an alternative server (e.g., EES, EAS, T-EES, or T-EAS) instead of the second server to the requesting entity (i.e., EEC 2 or S-EES). The alternative server information may be sent as part of the information about the edge data network. Specifically, if an alternative server (or alternative server configuration information) is available, the first server may send the (configuration) information about the alternative server to the requesting entity. The alternative server (i.e., alternative EES, or alternative EAS) may be referred to as a default server, a central server, or a centralized server.

The first server may send an identifier explicitly indicating that it is an alternative server to the requesting entity in association with the alternative server information. Based on the identifier, the requesting entity may recognize that the server information received is information about an alternative server. Alternatively, the requesting entity may recognize the received server information as being about an alternative server if the EAS information contained in the EAS discovery filters sent in the request to the first server (including the characteristics of the EASs, as discussed below) is not included in the response to the request. The alternative server information may also include a criterion that the alternative server is not able to meet, out of the at least one selection criterion for identifying a second server. The information on an alternative server may include a criterion that the alternative server satisfies, out of the at least one selection criterion for identifying a second server.

The alternative server information may be pre-configured (or provided) to the first server. Alternatively, the first server (e.g., EES 5) may dynamically or periodically retrieve the alternative server information from the ECS 7.

An alternative sever may be a server that cannot meet part or all of the at least one selection criterion for identifying a second server. For example, in the case of EES(s) selection (or determination, or discovery, or identification), if the first server (i.e., ECS 7) fails to identify an EES that exactly matches an Application Client profile provided by the EEC 2, the first server (i.e., EES 5) may respond to EEC 2's request with information on an alternative EES. The Application Client profile includes, for example, at least one of the following: "Application Client Schedule", "Expected Application Client Geographical Service Area", "Service Continuity Support", or "List of EASs". The Application Client Schedule indicates an expected operation schedule, e.g., time window, of the AC 3. The Expected Application Client Geographical Service Area indicates an expected location(s), e.g., route, of the UE 1 during the expected operating schedule of the AC 3. The Service Continuity Support indicates whether or not service continuity support is needed by the AC 3. The List of EASs includes an EAS ID and may further include Application Client Service Key Performance Indicators (KPIs). The Application Client Service KPIs indicate service characteristics required by the AC 3. These service characteristics include, for example, at least one of the following: connection bandwidth, maximum request rate to be generated by the AC, maximum response time, maximum compute resources required by the AC, maximum memory resources required by the AC, or Information specific to the AC type (e.g., video, Virtual Reality (VR), etc.). An alternative EES may be an EES that is unable to satisfy part or all of these service characteristics required by the Application Client profile. In other words, an alternative EES may be an EES that cannot provide the EEC 2 with a connection to an EAS that satisfies all of the service characteristics required by the Application Client profile. Put further, an alternative EES may be an EES that can provide the EEC 2 with only connections to EAS(s) that cannot meet part or all of the service characteristics required by the Application Client profile. Not that the response to EEC 2's request described above means a response in the service provisioning procedure based on the Request/Response model, but in the service provisioning procedure based on the Subscribe-Notify model, instead of a response to a request, the first server sends the alternative EES information to the EEC 2.

On the other hand, in the case of EAS(s) selection (or determination, or discovery, or identification), if the first server (i.e., EES 5) fails to identify an EAS that exactly matches EAS discovery filters provided by EEC 2, the first server (i.e., EES 5) may respond to EEC 2's request with information on an alternative EAS. The EAS discovery filters indicate a set of characteristics needed to determine the requested EAS. For example, the EAS discovery filters may include an Application Client profile as described above. Additionally or alternatively, the EAS discovery filters may indicate one or more required EASs characteristics. For example, each characteristic of a required EAS includes at least one of the following: an EAS ID, EAS provider identifier, category or type of the EAS, required availability schedule of the EAS, location(s) (e.g., geographical area, route) where the EAS service should be available, or topological area (e.g., cell ID, Tracking Area Identity (TAI)) for which the EAS service should be available. An alternative EAS may be an EAS that cannot meet part or all of these characteristics required by the EAS discovery filters. Note that the response to EEC 2's request described above means a response in the EAS discovery procedure based on the Request/Response model, but in the EAS discovery procedure based on the Subscribe-Notify model, instead of a response to a request, the first server sends the alternative EAS information to the EEC 2.

Additionally or alternatively, an alternative server may be available as an application server in the cloud. The cloud here means a central cloud located further away from the UE 1 than the EDN 4 (edge cloud). An alternative server may be a server located in a centralized location (e.g., centralized data center). An alternative server (i.e., alternative EES or EAS) may be an EES or EAS located in a data network that cannot meet some of the service characteristics (e.g., maximum response time) required in the Application Client profile. In some implementations, the second server is a server in an LADN, whereas the alternative server may be a server located in a normal DN that is not an LADN. Alternatively, the alternative server may be a server located in a second LADN that includes a server that does not meet at least one of the at least one selection criterion. The at least one of the at least one selection criterion may be a service area, a geographic area, a route, a topological area, or a maximum response time. Alternatively, the second server may be a server in a first LADN, whereas the alternative server may be a server located in a second LADN that corresponds to a larger service area than that to which the first LADN corresponds.

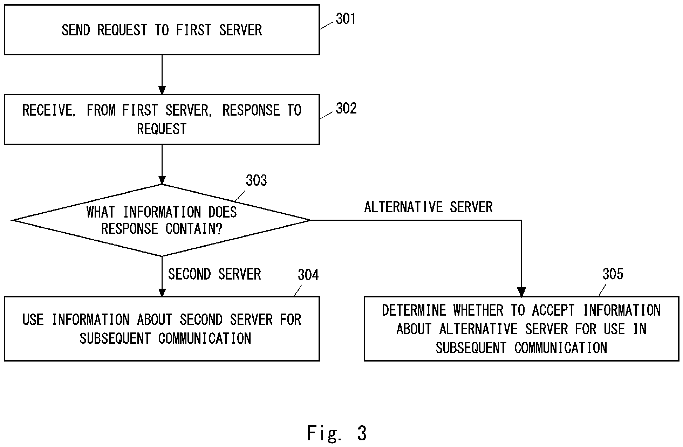

Fig. 3 shows a flowchart of an example of the operation of the requesting entity according to this example embodiment. In the case of EES(s) selection (or decision, or discovery, or identification), the requesting entity may be the EEC 2, or it may be an S-EES (e.g., EES 5) in edge application mobility. In the case of EAS(s) selection (or decision, or discovery, or identification), the requesting entity may be the EEC 2 or may be an S-EES in Edge Application Mobility.

In step 301, the requesting entity sends a request to the first server (e.g., ECS 7 or EES 5). The request requests a connection to an entity that provides a service in the edge data network. The request may be a service provisioning request or an EAS discovery request. The request may be an EEC registration request or an EEC registration update request. In step 302, the requesting entity receives a response or notification to the request from the first server (hereafter, notification and response may be read interchangeably).

If the response in step 302 contains information about a second server located within the EDN 4 and satisfying the at least one selection criterion, the procedure proceeds to step 304. Alternatively, if no identifier explicitly indicating that it is an alternative server is associated with the information on the second server in the response of step 302, the procedure proceeds to step 304. Alternatively, if the EAS information contained in the EAS discovery filters sent in the request to the first server is also included in the response of step 302, the procedure proceeds to step 304. In step 304, the requesting entity (e.g., EEC 2, or S-EES) uses the received second server (e.g., EES, EAS, T-EES, or T-EAS) information for subsequent communication. For example, if the requesting entity is the EEC 2 in the case of selection (or determination, or discovery, or identification) of an EES(s), then the EEC 2 may utilize the received information about the second server (i.e., EES) in a subsequent EAS discovery. Alternatively, if the requesting entity is the EEC 2 in the case of selection (or determination, or discovery, or identification) of an EAS(s), then the EEC 2 may use the received information (e.g., endpoint information) about the second server (i.e., the EES) for the routing of application data traffic to the EAS.

In contrast, if the response in step 302 does not contain second server information but instead contains alternative server information, the procedure proceeds to step 305. Alternatively, if an identifier explicitly indicating that it is an alternative server is associated with the (second, or alternative) server information in the response of step 302, the procedure proceeds to step 305. Alternatively, if the response of step 302 does not include the EAS information that has been contained in the Application Client profile (or EAS discovery filters) sent in the request to the first server, the procedure proceeds to step 305. In step 305, the requesting entity (e.g., EEC 2, or S-EES) determines whether to accept the received alternative server information for use in subsequent communications. In this decision, the requesting entity (e.g., EEC 2) may consider the service characteristics (e.g., Application Client Service KPIs) required by the Application Client profile.

Specifically, the EEC 2 may provide the received alternative server information to the AC 3. Based on a notification from the AC 3 indicating that it accepts the alternative server, the EEC 2 may determine that it accepts the alternative server information. On the other hand, based on a notification from the AC 3 indicating that it does not accept the alternative server, the EEC 2 may determine that it does not accept the alternative server information. The EEC 2 may consider in its acceptance decision whether an identifier explicitly indicating that it is an alternative server is associated with the (second, or alternative) server information. Specifically, in cases where the EEC 2 allows the acceptance of an alternative server, the EEC 2 may determine that it accepts the alternative server information if an identifier explicitly indicating that it is an alternative server is associated with the server information. On the other hand, in cases where the EEC 2 does not allow the acceptance of an alternative server, the EEC 2 may determine that it does not accept the alternative server information if an identifier explicitly indicating that it is an alternative server is associated with the server information. The EEC 2 may consider in its acceptance decision whether the EAS information that has been contained in the Application Client profile (or EAS discovery filters) sent in the request to the first server is also included in the response to the request. Specifically, in cases where the EEC 2 allows the acceptance of an alternative server, the EEC 2 may determine that it accepts the alternative server information if the EAS information contained in the Application Client profile (or EAS discovery filters) sent in the request to the first server is not included in the response to the request. On the other hand, in cases where the EEC 2 does not allow the acceptance of an alternative server, the EEC 2 may determine that it does not accept the alternative server information if the EAS information contained in the Application Client profile (or EAS discovery filters) sent in the request to the first server is not included in the response to the request. The cases for acceptance/non-acceptance of alternative servers by the EEC 2 may be based on a preconfigured local policy, or may be based on periodic checks of the alternative server acceptance/non-acceptance policy of the AC 3 in response to the receipt of alternative server information.

If the requesting entity is the EEC 2 and accepts the alternative EES information, the requesting entity (EEC 2) may operate as follows. When the EEC 2 initiates an EAS discovery procedure, the EEC 2 does not include EAS information in the EAS discovery filters (e.g., List of EASs in the Application Client Profile, and List of Edge Application Server characteristics).

If the requesting entity is the EEC 2 and does not accept the alternative EES information, the requesting entity (EEC 2) may operate as follows. The EEC 2 discards the received alternative EES information (configuration information) and aborts the service provisioning procedure. The EEC 2 may inform the AC 3 of the current status. The EEC 2 may map the current status information to AC-specific information (e.g., status). Alternatively, the EEC 2 may transparently forward the current status information to the AC 3.

Similarly, if the requesting entity is the EEC 2 and does not accept the alternative EAS information, the requesting entity (EEC 2) may operate as follows. The EEC 2 discards the received alternative EAS information (configuration information) and aborts the EAS discovery procedure. The EEC 2 may inform the AC 3 of the current status. The EEC 2 may map the current status information to AC-specific information (e.g., status). Alternatively, the EEC 2 may transparently forward the current status information to the AC 3.

According to the operations of the first server and the requesting entity described above, when a preferred or suitable second server that meets the selection criteria cannot be identified, found, selected, or determined, the first server can provide the requesting entity with information on an alternative server. The requesting entity can decide whether to use the alternative server for subsequent communication. In other words, if a preferred or suitable second server cannot be identified, the first server can propose an alternative (Plan B) to the requesting entity. While this may not allow the AC 3 to enjoy all of the desired service characteristics, Plan B, where an alternative server is used, can contribute to ensuring service provision and ensuring service continuity. Thus, the above described operations of the first server and requesting entity can mitigate the impact of failing to discover one or more edge servers that are preferred for the UE 1.

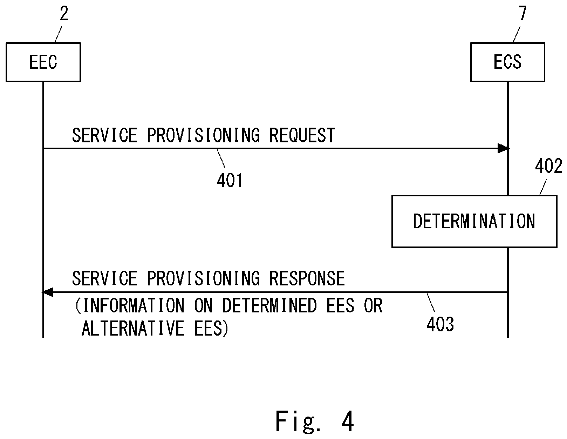

The following provides some specific examples of the implementation of the first server and requesting entity operations described above, with reference to Figs. 4 to 7. Fig. 4 shows an example of the operations of the EEC 2 and ECS 7 in a service provisioning procedure based on the Request/Response model. The EEC 2 in Fig. 4 corresponds to the requesting entity described above, while the ECS 7 in Fig. 4 corresponds to the first server described above. In step 401, the EEC 2 sends a service provisioning request to the ECS 7.

In step 402, the ECS 7 attempts to identify at least one EES that meets at least one selection criterion. For example, the at least one selection criterion considers the UE location, or the at least one Application Client profile provided by the EEC 2 via the request of step 401, or both of them. Additionally or alternatively, for example, the at least one selection criterion may consider one or both of the operational status of an EES and the load status of an EES. The at least one selection criterion may consider other factors, e.g., UE-specific service information in the ECS 7, or ECSP policy. As described with reference to Fig. 2 (step 205), the ECS 7 may select an alternative EES if it cannot identify an EES that meets the at least one selection criterion.

In step 403, the ECS 7 responds to the request from the EEC 2 with a service provisioning response. The response includes EDN configuration. The EDN configuration information includes, for example, identification information of the EDN 4, service area information (e.g., LADN service area), and information necessary to establish a connection to an EES (e.g., end point information). The EES information relates to either a determined EES, or an alternative EES. As described with reference to Fig. 3 (step 305), if the response contains information about an alternative EES, the EEC 2 may determine whether or not to accept the information about the alternative EES for use in subsequent communications.

The service provisioning procedure shown in Fig. 4 may be modified as appropriate. In particular, the service provisioning procedure may follow the Subscribe-Notify model instead of the Request-Response model. The signaling between the EEC 2 and ECS 7 shown in Fig. 4 may be performed via a user plane connection (e.g., data radio bearer and one or more user plane tunnels) provided by the 3GPP core network 8 and the access network. Alternatively, the signaling may be performed through a control plane connection provided by the 3GPP core network 8 and the access network. This control plane connection includes a Non-Access Stratum (NAS) signaling connection between the UE 1 and a control plane entity (e.g., AMF or Mobility Management Entity (MME)) in the 3GPP core network 8.

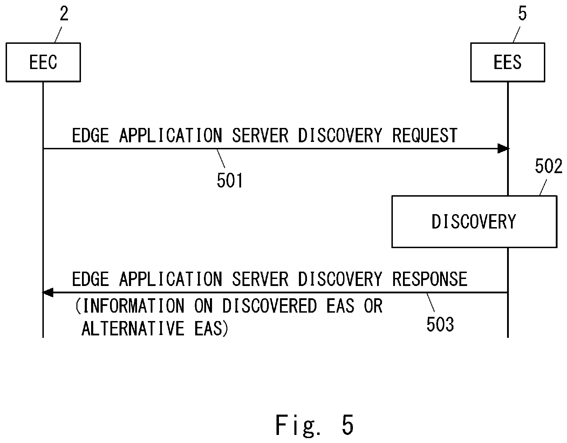

Fig. 5 shows an example of the operations of the EEC 2 and EES 5 in an EAS discovery procedure based on the Request/Response model. The EEC 2 in Fig. 5 corresponds to the requesting entity described above, while the EES 5 in Fig. 5 corresponds to the first server described above. In step 501, the EEC 2 sends an Edge Application Server discovery request to the EES 5.

In step 502, the EES 5 attempts to identify at least one EAS that meets at least one selection criterion. For example, the at least one selection criterion considers the UE location, or the EAS discovery filters provided by the EEC 2 via the request of step 501, or both of them. Additionally or alternatively, for example, the at least one selection criterion may consider one or both of the operational status of an EAS and the load status of an EAS. The at least one selection criterion may consider other factors, e.g., UE-specific service information in the EES 5, or ECSP policy. As described with reference to Fig. 2 (step 205), the EES 5 may select an alternative EAS if it cannot identify an EAS that meets the at least one selection criterion.

In step 503, the EES 5 responds to the request from the EEC 2 with an Edge Application Server discovery response. The response contains information on discovered EAS(s). For each discovered EAS, the information includes endpoint information. The information may also include additional information about matched capabilities, such as service permissions levels, AC locations that the EAS can support (Application Client locations that the Edge Application Servers can support), and KPIs. Alternatively, the response in step 503 may include information on an alternative EAS (e.g., endpoint information). In addition to the information about the alternative EAS, the response in step 503 may include additional information about partially matched capabilities, such as service permission levels, AC locations the alternative EAS can support, and KPIs. As described with reference to Fig. 3 (step 305), if the response contains information about an alternative EAS, the EEC 2 may determine whether or not to accept the information about the alternative EAS for use in subsequent communications.

The EAS discovery procedure shown in Fig. 5 may be modified as appropriate. In particular, the EAS discovery procedure may follow the Subscribe-Notify model instead of the Request-Response model. The signaling between the EEC 2 and EES 5 shown in Fig. 5 may be performed via a user plane connection (e.g., data radio bearer and one or more user plane tunnels) provided by the 3GPP core network 8 and the access network. Alternatively, the signaling may be performed through a control plane connection provided by the 3GPP core network 8 and the access network. This control plane connection includes a NAS signaling connection between the UE 1 and a control plane entity (e.g., AMF or MME) in the 3GPP core network 8.

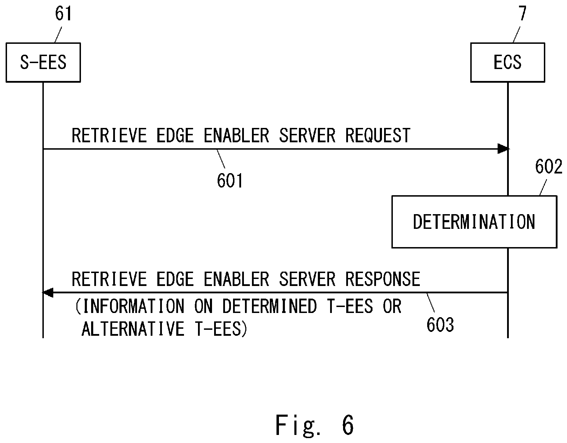

Fig. 6 shows an example of the operations of a source EES (S-EES) 61 and the ECS 7 in a Retrieve Target Edge Enabler Server procedure. The S-EES 61 in Fig. 6 corresponds to the requesting entity described above, while the ECS 7 in Fig. 6 corresponds to the first server described above. In step 601, the S-EES 61 sends a Retrieve Edge Enabler Server request to the ECS 7.

In step 602, the ECS 7 attempts to identify at least one target EES (T-EES) that meets at least one selection criterion. For example, the at least one selection criterion considers one or both of the UE location and the target DNAI. Additionally or alternatively, for example, the at least one selection criterion may consider one or both of the operational status of an EES and the load status of an EES. The at least one selection criterion may consider other factors, e.g., UE-specific service information in the ECS 7, or ECSP policy. As described with reference to Fig. 2 (step 205), the ECS 7 may select an alternative T-EES if it cannot identify a T-EES that meets the at least one selection criterion.

In step 603, the ECS 7 sends a Retrieve Edge Enabler Server response to the S-EES 61. The response contains a list of determined T-EES(s) information (e.g., endpoint information). Alternatively, the response may contain alternative T-EES(s) information (e.g., endpoint information). As described with reference to Fig. 3 (step 305), if the response contains information about an alternative T-EES, the S-EES 61 may determine whether or not to accept the information about the alternative EES for use in subsequent communications.

The Retrieve Target Edge Enabler Server procedure shown in Fig. 6 may be modified as appropriate. In particular, the Retrieve Target Edge Enabler Server procedure may follow the Subscribe-Notify model instead of the Request-Response model.

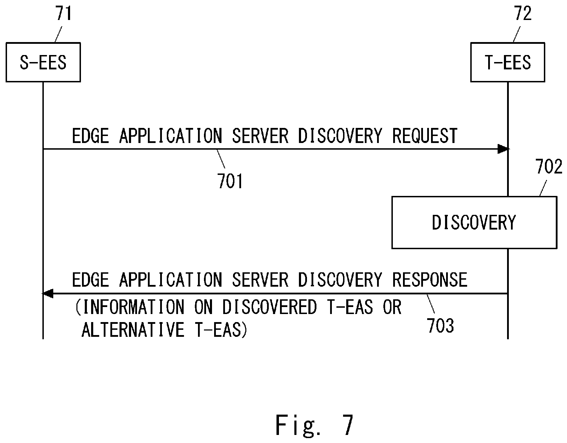

Fig. 7 shows an example of the operations of a source EES (S-EES) 71 and a target EES (T-EES) 72 in a Target EAS discovery procedure during an application context relocation determined or triggered by the source EES (S-EES). The S-EES 71 in Fig. 7 corresponds to the requesting entity described above, while the T-EES 72 in Fig. 7 corresponds to the first server described above. In step 701, the S-EES 71 sends an Edge Application Server discovery request to the T-EES 72.

In step 702, the T-EES 72 attempts to identify at least one target EAS (T-EAS) that meets at least one selection criterion. For example, the at least one selection criterion considers an EAS discovery filter matching the EAS profile of the S-EES 71, or consider the target DNAI, or consider both of them. Additionally or alternatively, for example, the at least one selection criterion may consider one or both of the operational status of an EAS and the load status of an EAS. The at least one selection criterion may consider other factors, e.g., UE-specific service information in the T-EES 72, or ECSP policy. As described with reference to Fig. 2 (step 205), the T-EES 72 may select an alternative T-EAS if it cannot identify a T-EAS that meets the at least one selection criterion.

In step 703, the T-EES 72 responds to the request from the S-EES 71 with an Edge Application Server discovery response. The response contains information on discovered T-EAS(s). For each discovered T-EAS, the information includes endpoint information. The information may also include additional information about matched capabilities, such as service permissions levels, AC locations that the EAS can support (Application Client locations that the Edge Application Servers can support), and KPIs. Alternatively, the response in step 703 may include information on an alternative T-EAS (e.g., endpoint information). In addition to the information about the alternative T-EAS, the response in step 703 may include additional information about partially matched capabilities, such as service permission levels, AC locations the alternative EAS can support, and KPIs. As described with reference to Fig. 3 (step 305), if the response contains information about an alternative T-EAS, the EEC 2 may determine whether or not to accept the information about the alternative T-EAS for use in subsequent communications.

### Second Example Embodiment

This example embodiment provides a modification of the operations of the first server and requesting entity described in the first example embodiment. An example of the network architecture according to this example embodiment is the same as the example described with reference to Fig. 1.

In this example embodiment, the requesting entity includes in the request sent to the first server an indication of whether the requesting entity desires information on an alternative server, can accept information on an alternative server, or supports service provision using an alternative server (e.g., steps 301, 401, 501, 601, and 701). The requesting entity may decide whether to include this indication in the request based on the Application Client Profile. The first server receives the request containing this indications (e.g., steps 201, 401, 501, 601, and 701). The first server then decides whether or not to send information about an alternative server if it fails to identify a preferred second server that satisfies the selection criteria, taking into account the indication received from the requesting entity (e.g., steps 205, 402, 502, 602, and 702).

According to these operations, the first server can decide whether or not to send information about an alternative server based on the needs of the requesting entity.

### Third Example Embodiment

This example embodiment provides a modification of the operations of the first server and requesting entity described in the first example embodiment. An example of the network architecture according to this example embodiment is the same as the example described with reference to Fig. 1.

In one example of the deployment of the ECS 7 and EES 5 in this example embodiment, the ECS 7 may be located in a mobile network operator (MNO) domain serving the 3GPP core network 8 while the EES 5 may be located in a third party domain of a service provider (ECSP). In this case, ECS 7 may configure the EEC 2 with EES information based on an agreement between the MNO and the service provider. In other words, the ECS 7 does not always identify (discover, select, or determine) an EES based on application requirements for edge services. Thus, in this example embodiment, as a result of the validation of a registration request (EEC registration request, EEC registration update request) from the EEC 2, if no EES (source EES) under its control (or EASs registered in an EES under its control) satisfies the validation criteria based on the registration request, the EES 5 may perform relocation (EES re-allocation) of the registration to another EES (target EES) that satisfies the validation criteria.

The validation of the registration request includes identifying a second server that is located within EDN 4, as described in the above example embodiments, as well as validating a security requirement.

The validation criteria may include part or all of the selection criteria described in the above example embodiments, or may include other requirements. Specifically, the validation criteria include part or all of the selection criteria described in the above example embodiments, as well as a security requirement.

In the implementation of this example embodiment, the deployment of the ECS 7 and EES 5 is not limited to the deployment examples described above.

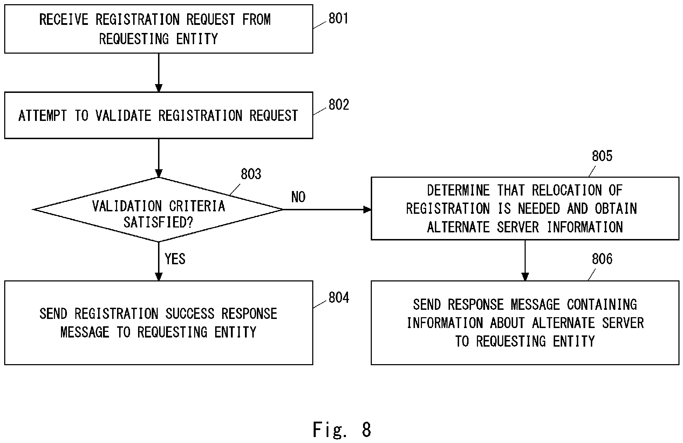

Fig. 8 is a flowchart showing an example of the operation of the first server in this example embodiment. The first server may be the EES 5 and may attempt to register the EEC 2 in response to a registration request from the EEC 2 of the UE 1, which is the requesting entity. In step 801, the first server receives a registration request (i.e., registration request or registration update request) from the requesting entity.

In step 802, upon receipt of the registration request, the first server attempts to validate (identify, discover, select, or determine) the registration request. At least one factor considered in the registration request validation may include at least one of the following: a security requirement, the location of the UE 1, the Application Client Profile(s) provided by the EEC 2, or the operational status of a second server (i.e., EAS). In a specific example of the validation of the registration request based on the Application Client Profile(s) provided by the EEC 2, the EES 5 may identify an EAS(s) that match the provided Application Client profile(s). If multiple Application Client profiles are provided, the EES 5 may identify an EAS(s) that match all the Application Client profiles. Alternatively, the EES 5 may identify an EAS(s) that match at least one of the provided multiple Application Client profiles. Alternatively, the EES 5 may identify an EAS(s) on a per-Application Client profile basis.

Here, the term "matching" may mean that information (e.g., characteristics, performance, state) about an EAS satisfies information or conditions regarding the Application Client contained in an Application Client profile. The selection criteria for EAS(s) may be as follows. The Application Client profile includes, for example, at least one of the following: "Application Client Schedule", "Expected Application Client Geographical Service Area", "Service Continuity Support", or "List of EASs". The Application Client Schedule indicates an expected operation schedule, e.g., time window, of the AC 3. The Expected Application Client Geographical Service Area indicates an expected location(s), e.g., route, of the UE 1 during the expected operating schedule of the AC 3. The Service Continuity Support indicates whether or not service continuity support is needed by the AC 3. The List of EASs includes an EAS ID and may further include Application Client Service Key Performance Indicators (KPIs). The Application Client Service KPIs indicate service characteristics required by the AC 3. These service characteristics include, for example, at least one of the following: connection bandwidth, maximum request rate to be generated by the AC, maximum response time, maximum compute resources required by the AC, maximum memory resources required by the AC, or Information specific to the AC type (e.g., video, Virtual Reality (VR), etc.). The EES 5 may identify an EAS that matches all the information elements contained in the Application Client profile. Alternatively, the EES 5 may identify an EAS that matches at least one information element contained in the Application Client profile. Alternatively, the EES 5 may identify an EAS(s) that matches all the information elements in the Application Client profile except the "List of EASs" and that matches at least one item in the "List of EASs".

The UE Location may identify the network to which the UE 1 is connected or the position of the UE 1. The value of the UE Location may be a Cell Identity (ID), Tracking Area Identity (TAI), Global Positioning System (GPS) Coordinates, or a civic address. The selection criteria concerning the UE location for the selection of EAS(s) by the EES 5 may require that the location of the UE 1 be within an EDN service area, EES service area, or EAS service area. The EAS service area may be a topological service area (e.g., a Cell ID(s), or TAI(s)) or may be a geographic service area. The EAS service area may be the same as or a subset of the EDN service area. The EAS service area may be the same as or a subset of the EES service area.

If the registration request satisfies the validation criteria (YES in step 803), the procedure proceeds to step 804. In step 804, the first server (i.e., EES 5) sends a successful registration response message to the requesting entity (i.e., EEC 2) indicating that the registration of step 801 was successful. Note that satisfying the validation criteria means both identifying a second server as described in the above example embodiments and satisfying the security requirements.

In contrast, if the registration request fails to satisfy the validation criteria (NO in step 803), the procedure proceeds to step 805. Failure to satisfy the validation criteria means that either no second server can be identified as described in the example embodiments above, or the security requirements are not satisfied (or no second server is available), or both. In step 805, the first server (i.e., EES 5) considers the results of the validation in step 802 and determines whether relocation of the registration is needed. If it is determined that relocation of the registration is needed, the first server (i.e., EES 5) obtains, from the ECS 7, alternative server information that will substitute for the registration destination. The alternative server information may be information about one or more EESs different from the EES 5. Upon obtaining the alternative server information, the first server sends a response message to the EEC 2 as a response to the registration request (step 806), which in one example contains information explicitly indicating that relocation of the registration to an alternative server is required. Alternatively, upon obtaining the alternate server information, the first server may include the alternate server information in a registration failure response message and send this to the EEC 2 as a response to the registration request. Alternatively, in response to obtaining the alternative server information, the first server may include, in a registration failure response message, the alternative server information and information explicitly indicating that relocation of the registration to the alternative server is required, and send this message to the EEC 2 as a response to the registration request. In another example, the first server notifies the alternative server of the relocation of the registration. The alternative server substitutes for the first server and takes over and executes the registration procedure upon receipt of the registration relocation notification. At this time, the alternative server may perform the validation of the registration request (i.e., from step 802 onward) described above. If it determines that the registration request satisfies the validation criteria (YES in step 803), the procedure proceeds to step 804. In step 804, the alternative server sends a registration success response message to the requesting entity (i.e., EEC 2) on behalf of the first server.

According to the operations of the first server, the alternative server, and the requesting entity described above, when a registration request does not satisfy the validation criteria, the first server can prevent a registration failure by performing a relocation to an alternative server.

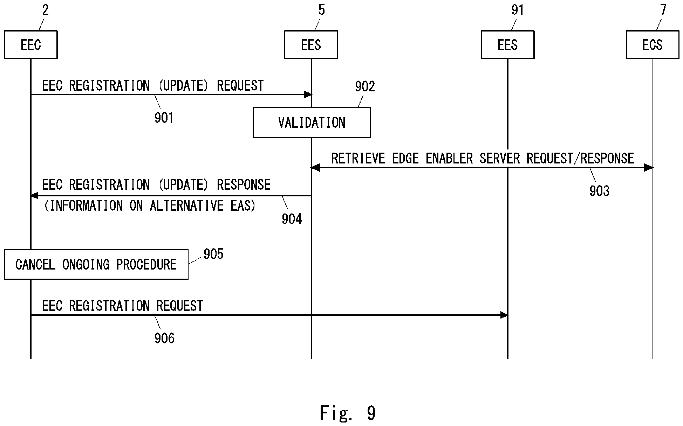

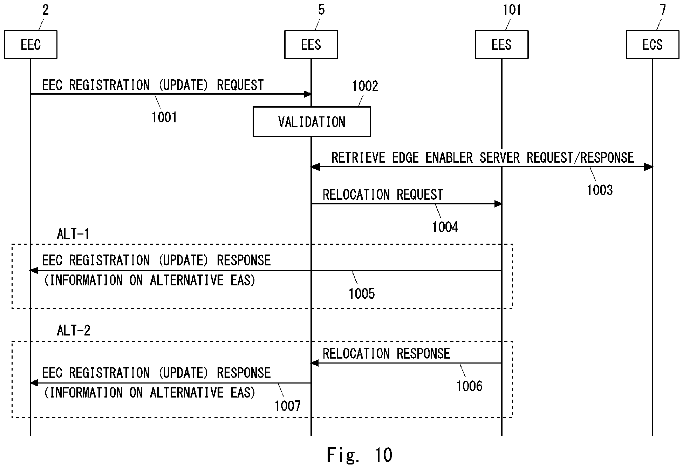

The following provides some specific examples of the implementation of the operations of the first server, alternative server and requesting entity described above, with reference to Fig. 9 and Fig. 10.

Fig. 9 shows the operations of the EEC 2, EES 5 (source EES), and EES 91 (target EES) as an example of relocation of a registration. The EEC 2 in Fig. 9 corresponds to the requesting entity described above, the EES 5 in Fig. 9 corresponds to the first server described above, and the EES 91 in Fig. 9 corresponds to the alternative server described above. In step 901, the EEC 2 sends an EEC registration request or an EEC registration update request to the EES 5.

In step 902, the EES 5 initiates validation of the registration request, as described with reference to Fig. 8 (step 802). Further, as described with reference to Fig. 8 (step 803), the EES 5 determines that relocation of the registration to an alternate server is needed if the registration request does not satisfy the validation criteria.

In step 903, upon determining that relocation of the registration to an alternative server is necessary, the EES 5 sends a request to the ECS 7 to obtain (or query) alternative server information. The request for obtaining alternative server information may follow the method described in Non-Patent Literature 1 (Figure 8.8.3.3-1). In addition, the request may include Application Client Profiles received by the EES 5 from the EEC 2.

In step 904, the EES 5 sends a response message containing information about one or more alternative servers, including information about the EES 91, obtained in step 903, to the EEC 2 as a response to the registration request. The response message may be, for example, an EEC registration response or an EEC registration update response. The response message may contain information requesting to register with a different EES for relocation of the registration. The information requesting registration for relocation may be an attribute information "Registration requested" requesting EEC registration with the value set to "True", or it may be information with the value set to "Registration requested".

In step 905, the EEC 2 may abort the registration procedure initiated in step 901 upon receipt of the response in step 904.

In step 906, the EEC 2 selects EES 91 out of one or more alternative server information received in step 904 and sends an EEC registration request to the EES 91 as a registration request. This triggers the registration procedure and relocation of the registration to the alternative server.

Fig. 10 shows the operations of the EEC 2, EES 5 (source EES), and EES 101 (target EES) as another example of relocation of a registration. The EEC 2 in Fig. 10 corresponds to the requesting entity described above, the EES 5 in Fig. 10 corresponds to the first server described above, and the EES 101 in Fig. 10 corresponds to the alternative server described above. In step 1001, the EEC 2 sends an EEC registration request or an EEC registration update request to the EES 5.

In step 1002, the EES 5 initiates validation of the registration request, as described with reference to Fig. 8 (step 802). Further, as described with reference to Fig. 8 (step 803), the EES 5 determines that relocation of the registration to an alternate server is needed if the registration request does not satisfy the validation criteria.

In step 1003, upon determining that relocation of the registration to an alternative server is necessary, the EES 5 sends a request to the ECS 7 to obtain (or query) alternative server information. The request for obtaining alternative server information may follow the method described in Non-Patent Literature 1 (Figure 8.8.3.3-1). In addition, the request may include Application Client Profiles received by the EES 5 from the EEC 2.

In step 1004, the EES 5 selects an EES 101 out of one or more alternative server information, including information on the EES 101, obtained in step 1003, and sends a registration relocation notification to the EES 101. The registration relocation notification may include all the information contained in the registration request that the EES 5 received from the EEC 2 in step 1001. Alternatively, the registration relocation notification may include the registration request itself. Upon receipt of the registration relocation notification, the EES 101 may take over and perform the registration procedure. Specifically, the EES 101 may perform the registration request validation (from step 802 onward) described above. The EES 101, as an alternative server, may send to the EES 5 a response to the registration relocation notification received in step 1004 indicating that the registration of the EEC 2 has succeeded.

In step 1005, if the EES 101 determines that the registration request meets the validation criteria, on behalf of EES 5, the EES 101 sends to the EEC 2 a successful registration response message containing information on the EES 121 (Alternative (ALT) 1 in Fig. 10). Alternatively, in response to receiving a registration relocation notification response from the EES 101 at step 1006 that includes the information on the EES 101, the EES 5 may send to the EEC 2 a registration success response message at step 1007 that includes the information on the EES 101 (Alternative (ALT) 2 in Fig. 10).

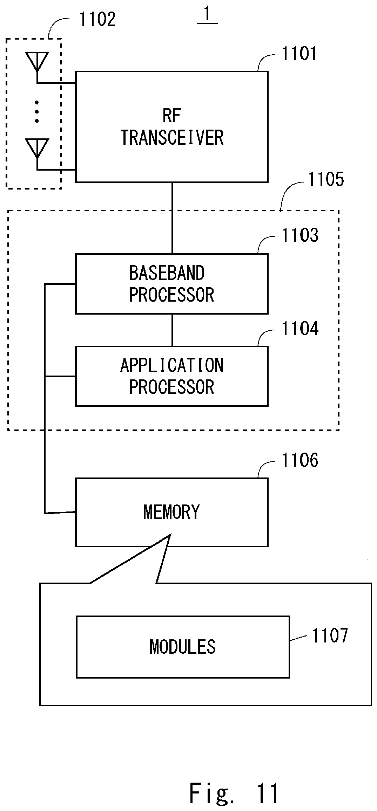

The following provides configuration examples of the UE 1, EES 5, EAS 6, and ECS 7 according to the above-described example embodiments. Fig. 11 is a block diagram showing an example configuration of the UE 1. A Radio Frequency (RF) transceiver 1101 performs analog RF signal processing to communicate with RAN nodes. The RF transceiver 1101 may include a plurality of transceivers. The analog RF signal processing performed by the RF transceiver 1101 includes frequency up-conversion, frequency down-conversion, and amplification. The RF transceiver 1101 is coupled to an antenna array 1102 and a baseband processor 1103. The RF transceiver 1101 receives modulated symbol data (or OFDM symbol data) from the baseband processor 1103, generates a transmission RF signal, and supplies the transmission RF signal to the antenna array 1102. Further, the RF transceiver 1101 generates a baseband reception signal based on a reception RF signal received by the antenna array 1102 and supplies the baseband reception signal to the baseband processor 1103. The RF transceiver 1101 may include an analog beamformer circuit for beam forming. The analog beamformer circuit includes, for example, a plurality of phase shifters and a plurality of power amplifiers.

The baseband processor 1103 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame) (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 1103 may include, for example, signal processing of Service Data Adaptation Protocol (SDAP), Packet Data Convergence Protocol (PDCP), Radio Link Control (RLC), Medium Access Control (MAC), and Physical (PHY) layers. The control-plane processing performed by the baseband processor 1103 may include processing of Non-Access Stratum (NAS) protocols, Radio Resource Control (RRC) protocols, MAC Control Elements (CEs), and Downlink Control Information (DCIs).

The baseband processor 1103 may perform Multiple Input Multiple Output (MIMO) encoding and pre-coding for beam forming.

The baseband processor 1103 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 1104 described below.

The application processor 1104 is also referred to as a CPU, an MPU, a microprocessor, or a processor core. The application processor 1104 may include a plurality of processors (or processor cores). The application processor 1104 loads a system software program (Operating System (OS)) and various application programs (e.g., a call application, a WEB browser, a mailer, a camera operation application, and a music player application) from a memory 1106 or from another memory not shown and executes these programs, thereby providing various functions of the UE 1.

In some implementations, as represented by a dashed line (1105) in Fig. 11, the baseband processor 1103 and the application processor 1104 may be integrated on a single chip. In other words, the baseband processor 1103 and the application processor 1104 may be implemented in a single System on Chip (SoC) device 1105. The SoC device may be referred to as a Large-Scale Integration (LSI) or a chipset.

The memory 1106 is a volatile memory, a non-volatile memory, or a combination thereof. The memory 1106 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1106 may include, for example, an external memory device that can be accessed from the baseband processor 1103, the application processor 1104, and the SoC 1105. The memory 1106 may include an internal memory device that is integrated in the baseband processor 1103, the application processor 1104, or the SoC 1105. Further, the memory 1106 may include a memory in a Universal Integrated Circuit Card (UICC).

The memory 1106 may store one or more software modules (computer programs) 1107 including instructions and data to perform the processing by the UE 1 described in the above example embodiments. In some implementations, the baseband processor 1103 or the application processor 1104 may load these software modules 1107 from the memory 1106 and execute the loaded software modules, thereby performing the processing of the UE 1 described in the above example embodiments with reference to the drawings.

The control-plane processing and operations performed by the UE 1 described in the above example embodiments can be achieved by elements other than the RF transceiver 1101 and the antenna array 1102, i.e., achieved by the memory 1106, which stores the software modules 1107, and one or both of the baseband processor 1103 and the application processor 1104.

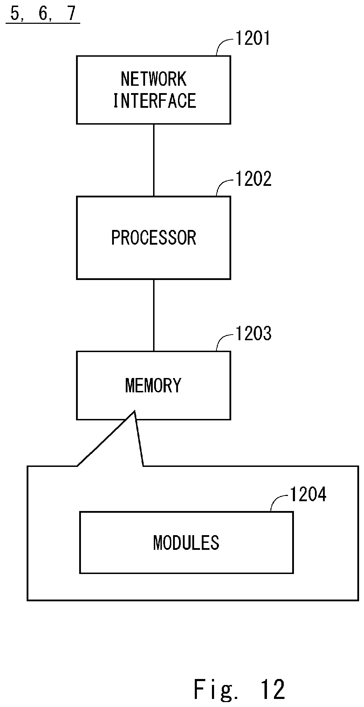

Fig. 12 shows an example configuration of the EES 5. The EAS 6 and ECS 7 may also have the configuration as shown in Fig. 12. Referring to Fig. 12, the EES 5 (or EAS 6, or ECS 7) includes a network interface 1201, a processor 1202, and a memory 1203. The network interface 1201 is used to communicate with other network functions (NFs) or nodes. The network interface 1201 may include, for example, a network interface card (NIC) conforming to the IEEE 802.3 series.

The processor 1202 may be, for example, a microprocessor, a Micro Processing Unit (MPU), or a Central Processing Unit (CPU). The processor 1202 may include a plurality of processors.

The memory 1203 is composed of a volatile memory and a nonvolatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1203 may include a storage located apart from the processor 1202. In this case, the processor 1202 may access the memory 1203 via the network interface 1201 or an I/O interface not shown.

The memory 1203 may store one or more software modules (computer programs) 1204 including instructions and data to perform the processing of the EES 5 (or EAS 6, or ECS 7) described in the above example embodiments. In some implementations, the processor 1202 may be configured to load the one or more software modules 1204 from the memory 1203 and execute the loaded software modules, thereby performing the processing of the EES 5 (or EAS 6, or ECS 7) described in the above example embodiments.

As described using Figs. 11 and 12, each of the processors in the UE 1, EES 5, EAS 6, and ECS 7 according to the example embodiments described above executes one or more programs, containing a set of instructions, to cause a computer to perform an algorithm described with reference to the drawings. These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the programs to a computer via a wired communication line (e.g., electric wires, and optical fibers) or a wireless communication line.

The User Equipment (UE) in the present disclosure is an entity to be connected to a network via a wireless interface. It should be noted that the radio terminal (UE) in the present disclosure is not limited to a dedicated communication device, and it may be any device as follows having the communication functions herein explained.

The terms "User Equipment (UE)" (as the term is used by 3GPP), "mobile station", "mobile terminal", "mobile device", and "radio terminal (wireless device)" are generally intended to be synonymous with one another. The UE may include standalone mobile stations, such as terminals, cell phones, smartphones, tablets, cellular IoT (internet of things) terminals, and IoT devices. It will be appreciated that the terms "UE" and "radio terminal" also encompass devices that remain stationary for a lengthy period of time.

A UE may, for example, be an item of equipment for production or manufacture and/or an item of energy related machinery (for example equipment or machinery such as: boilers; engines; turbines; solar panels; wind turbines; hydroelectric generators; thermal power generators; nuclear electricity generators; batteries; nuclear systems and/or associated equipment; heavy electrical machinery; pumps including vacuum pumps; compressors; fans; blowers; oil hydraulic equipment; pneumatic equipment; metal working machinery; manipulators; robots and/or their application systems; tools; molds or dies; rolls; conveying equipment; elevating equipment; materials handling equipment; textile machinery; sewing machines; printing and/or related machinery; paper making machinery; chemical machinery; mining and/or construction machinery and/or related equipment; agriculture, forestry and/or fisheries machinery and/or implements; safety and/or environment preservation equipment; tractors; bearings; precision bearings; chains; gears; power transmission equipment; lubricators; valves; pipe fittings; and/or application systems for any of the previously mentioned equipment or machinery etc.).

A UE may, for example, be an item of transport equipment (for example transport equipment such as: rolling stocks; motor vehicles; motorcycles; bicycles; trains; buses; carts; rickshaws; ships and other watercraft; aircraft; rockets; satellites; drones; balloons etc.).

A UE may, for example, be an item of information and communication equipment (for example information and communication equipment such as: electronic computer and related equipment; communication and related equipment; electronic components etc.).

A UE may, for example, be an item of refrigeration equipment, a refrigeration application product and equipment, trade and/or service industry equipment, a vending machine, an automatic service machine, an office machine or equipment, a consumer electronic and electronic appliance (for example a consumer electronic appliance such as: audio equipment; a speaker; a radio; video equipment; a television; an oven range; a rice cooker; a coffee maker; a dishwasher; a washing machine; dryers, a fan, an exhaust fan and related products, a vacuum cleaner etc.).

A UE may, for example, be an electrical application system or equipment (for example an electrical application system or equipment such as: an x-ray system; a particle accelerator; radio isotope equipment; sonic equipment; electromagnetic application equipment; electronic power application equipment etc.).

A UE may, for example, be an electronic lamp, a luminaire, a measuring instrument, an analyzer, a tester, or a surveying or sensing instrument (for example a surveying or sensing instrument such as: a smoke alarm; a human alarm sensor; a motion sensor; a wireless tag etc.), a watch or clock, a laboratory instrument, optical apparatus, medical equipment and/or system, a weapon, a sharp-edged tool, a hand tool, or the like.

A UE may, for example, be a personal digital assistant or device with wireless communication capabilities (such as a wireless card or module designed for attachment to or for insertion into another electronic device (for example a personal computer, electrical measuring machine)).

A UE may be a device or a part of a system that provides applications, services, and solutions described below, as to "internet of things (IoT)", using a variety of wired and/or wireless communication technologies. Internet of Things devices (or "things") may be equipped with appropriate electronics, software, sensors, network connectivity, and/or the like, which enable these devices to collect and exchange data with each other and with other communication devices. IoT devices may comprise automated equipment that follow software instructions stored in an internal memory. IoT devices may operate without requiring human supervision or interaction. IoT devices might also remain stationary and/or inactive for a lengthy period of time. IoT devices may be implemented as a part of a (generally) stationary apparatus. IoT devices may also be embedded in non-stationary apparatus (e.g., vehicles) or attached to animals or persons to be monitored/tracked. It will be appreciated that IoT technology can be implemented on any communication devices that can connect to a communications network for sending/receiving data, regardless of whether such communication devices are controlled by human input or software instructions stored in memory. It will be appreciated that IoT devices are sometimes also referred to as Machine-Type Communication (MTC) devices, Machine-to-Machine (M2M) communication devices, or Narrow Band-IoT (NB-IoT) UE.

It will be appreciated that a UE may support one or more IoT or MTC applications.

Some examples of MTC applications are listed in 3GPP TS 22.368 V13.2.0 (2017-01-13), Annex B (the contents of which are incorporated herein by reference). This list is not exhaustive and is intended to be indicative of some examples of MTC applications. In this list, the Service Area of the MTC applications includes security, tracking & tracing, payment, health, remote maintenance/control, metering, and consumer devices.

Examples of the MTC applications regarding Security include surveillance systems, backup for landline telephone, control of physical access (e.g., to buildings), and car/driver security.

Examples of the MTC applications regarding tacking & tracing include fleet management, order management, telematics insurance: pay as you drive (PAYD), asset tracking, navigation, traffic information, road tolling, and road traffic optimisation/steering.

Examples of the MTC applications regarding payment include point of sales (POS), vending machines, and gaming machines.

Examples of the MTC applications regarding health include monitoring vital signs, supporting the aged or handicapped, web access telemedicine points, and remote diagnostics.

Examples of the MTC applications regarding remote maintenance/control include sensors, lighting, pumps, valves, elevator control, vending machine control, and vehicle diagnostics.

Examples of the MTC applications regarding metering include power, gas, water, heating, grid control, and industrial metering.

Examples of the MTC applications regarding consumer devices include digital photo frame, digital camera, and ebook.

Applications, services, and solutions may be an mobile virtual network operator (MVNO) service/system, an emergency radio communication service/system, a private branch exchange (PBX) service/system, a PHS/digital cordless telecommunications service/system, a point of sale (POS) service/system, an advertise calling service/system, a Multimedia Broadcast and Multicast Service (MBMS) service/system, a Vehicle to Everything (V2X) service/system, a train radio service/system, a location related service/system, a disaster/emergency wireless communication service/system, an Internet of Things (IoT) service/system, a community service/system, a video streaming service/system, a femto cell application service/system, a Voice over LTE (VoLTE) service/system, a radio tag service/system, a charging service/system, a radio on demand service/system, a roaming service/system, an activity monitoring service/system, a telecom carrier/communication NW selection service/system, a functional restriction service/system, a proof of concept (PoC) service/system, a personal information management service/system, a display video service/system, a non-communication service/system, an ad-hoc network/ delay tolerant networking (DTN) service/system, etc.

The above-described UE categories are merely examples of applications of the technical ideas and embodiments described in the present disclosure. The UE described in this disclosure is not limited to these examples and various modifications can be made thereto by those skilled in the art.

The above-described example embodiments are merely examples of applications of the technical ideas obtained by the inventors. These technical ideas are not limited to the above-described example embodiments and various modifications can be made thereto.

The whole or part of the example embodiments disclosed above can be described as, but not limited to, the following supplementary notes.

### (Supplementary Note 1)

A first server comprising:
at least one memory; and
at least one processor coupled to the at least one memory and configured to:
   in response to receiving from a requesting entity a request for a connection to an entity providing a service in an edge data network, attempt to identify a second server located in the edge data network based on at least one selection criterion; and
   if the second server cannot be identified or is not available, identify a second alternative server that is different from the second server, or identify a first alternative server that substitutes for the first server for attempting to identify the second server.

### (Supplementary Note 2)

The first server according to Supplementary Note 1, wherein the at least one processor is configured to, upon identifying the second alternative server, send information about the second alternative server to the requesting entity.

### (Supplementary Note 3)

The first server according to Supplementary Note 1 or 2, wherein the second alternative server is a server that cannot meet part or all of the at least one selection criterion.

### (Supplementary Note 4)

The first server according to any one of Supplementary Notes 1 to 3, wherein
the second server is a server located in the edge data network, which is a first Local Area Data Network (LADN), and
the second alternative server is a server located in a second LADN that includes a server that does not meet at least one of the at least one selection criterion.

### (Supplementary Note 5)

The first server according to Supplementary Note 4, wherein the at least one of the at least one selection criterion, which is not met, is a service area, a geographic area, a route, a topological area, or a maximum response time.

### (Supplementary Note 6)

The first server according to Supplementary Note 4 or 5, wherein the second alternative server is a server located in the second LADN that corresponds to a larger service area than that to which the first LADN corresponds.

### (Supplementary Note 7)

The first server according to any one of Supplementary Notes 1 to 3, wherein
the second server is a server located in the edge data network, which is a Local Area Data Network (LADN), and
the second alternative server is a server located in a data network that is not a LADN.

### (Supplementary Note 8)

The first server according to any one of Supplementary Notes 1 to 7, wherein
the request contains an indication that the requesting entity desires information about a second alternative server, can accept information about a second alternative server, or supports service provision using a second alternative server, and
the at least one processor is configured to determine, based on the indication, whether or not to send the information about the second alternative server to the requesting entity if the second server cannot be identified.

### (Supplementary Note 9)

The first server according to Supplementary Note 1 or 2, wherein the at least one processor is configured to, upon identifying the first alternative server, send information about the first alternative server to the requesting entity.

### (Supplementary Note 10)

The first server according to Supplementary Note 1 or 2, wherein the at least one processor is configured to, upon identifying the first alternative server, send information corresponding to the request to the first alternative server to cause the first alternative server to attempt to identify the second server.

### (Supplementary Note 11)

The first server according to any one of Supplementary Notes 1 to 8, wherein
the first server is an Edge Configuration Server (ECS),
each of the second server and the second alternative server is an Edge Enabler Server (EES) or a target EES, and
the requesting entity is an Edge Enabler Client (EEC) located in a User Equipment (UE), or a source EES.

### (Supplementary Note 12)

The first server according to Supplementary Note 11, wherein the at least one selection criterion includes at least one of: a location of the UE, at least one Application Client profile provided by the EEC, an operational status of the second server, or a load status of the second server.

### (Supplementary Note 13)

The first server according to any one of Supplementary Notes 1 to 8, wherein
the first server is an Edge Enabler Server (EES), a source EES, or a target EES,
each of the second server and the second alternative server is an Edge Application Server (EAS) or a target EAS, and
the requesting entity is an Edge Enabler Client (EEC) located in a User Equipment (UE), a source EAS, or a source EES.

### (Supplementary Note 14)

The first server according to Supplementary Note 13, wherein the at least one selection criterion includes at least one of: a location of the UE, EAS discovery filters provided by the EEC, an operational status of the second server, or a load status of the second server.

### (Supplementary Note 15)

The first server according to Supplementary Note 1, wherein the at least one processor is configured to, if the second server cannot be identified, obtain information about the first alternative server from a third server that manages information about the first server.

### (Supplementary Note 16)

The first server according to Supplementary Note 1 or 15, wherein
each of the first server and the first alternative server is an Edge Enabler Server (EES),
the second server is an Edge Application Server (EAS), and
the requesting entity is an Edge Enabler Client (EEC) located in a User Equipment (UE).

### (Supplementary Note 17)

The first server according to Supplementary Note 16, wherein the at least one selection criterion includes at least one of: a security requirement, a location of the UE, at least one Application Client profile provided by the EEC, EAS discovery filters provided by the EEC, an operational status of the second server, or a load status of the second server.

### (Supplementary Note 18)

A method performed by a first server, the method comprising:
in response to receiving from a requesting entity a request for a connection to an entity providing a service in an edge data network, attempting to identify a second server located in the edge data network based on at least one selection criterion; and
if the second server cannot be identified or is not available, identifying a second alternative server that is different from the second server, or identifying a first alternative server that substitutes for the first server for attempting to identify the second server.

### (Supplementary Note 19)

A program for causing a computer to perform a method for a first server, wherein the method comprises:
in response to receiving from a requesting entity a request for a connection to an entity providing a service in an edge data network, attempting to identify a second server located in the edge data network based on at least one selection criterion; and
if the second server cannot be identified or is not available, identifying a second alternative server that is different from the second server, or identifying a first alternative server that substitutes for the first server for attempting to identify the second server.

### (Supplementary Note 20)

A requesting entity comprising:
at least one memory; and
at least one processor coupled to the at least one memory and configured to:
   send to a first server a request for a connection to an entity providing a service in an edge data network;
   receive a response to the request from the first server; and
   in a case where a second server that is located in the edge data network and that an attempt is made to identify based on at least one selection criterion cannot be identified, if the response includes information about a second alternative server that is different from the second server or information about a first alternative server that substitutes for the first server for attempting to identify the second server, decide whether to accept the information about the first alternative server or the information about the second alternative server for provision of the service.

### (Supplementary Note 21)

The requesting entity according to Supplementary Note 20, wherein the second alternative server is a server that cannot meet part or all of the at least one selection criterion.

### (Supplementary Note 22)

The requesting entity according to Supplementary Note 20 or 21, wherein
the second server is a server located in the edge data network, which is a first Local Area Data Network (LADN), and
the second alternative server is a server located in a second LADN that includes a server that does not meet at least one of the at least one selection criterion.

### (Supplementary Note 23)

The requesting entity according to Supplementary Note 22, wherein the at least one of the at least one selection criterion, which is not met, is a service area, a geographic area, a route, a topological area, or a maximum response time.

### (Supplementary Note 24)

The requesting entity according to Supplementary Note 22 or 23, wherein the second alternative server is a server located in the second LADN that corresponds to a larger service area than that to which the first LADN corresponds.

### (Supplementary Note 25)

The requesting entity according to Supplementary Note 20 or 21, wherein
the second server is a server located in the edge data network, which is a Local Area Data Network (LADN), and
the second alternative server is a server located in a data network that is not a LADN.

### (Supplementary Note 26)

The requesting entity according to any one of Supplementary Notes 20 to 25, wherein the at least one processor is configured to include in the request an indication that the requesting entity desires information about a second alternative server, can accept information about a second alternative server, or supports service provision using a second alternative server.

### (Supplementary Note 27)

The requesting entity according to any one of Supplementary Notes 20 to 26, wherein
the first server is an Edge Configuration Server (ECS),
each of the second server and the second alternative server is an Edge Enabler Server (EES) or a target EES, and
the requesting entity is an Edge Enabler Client (EEC) located in a User Equipment (UE), or a source EES.

### (Supplementary Note 28)

The requesting entity according to Supplementary Note 27, wherein the at least one selection criterion includes at least one of: a location of the UE, at least one Application Client profile provided by the EEC, an operational status of the second server, or a load status of the second server.

### (Supplementary Note 29)

The requesting entity according to any one of Supplementary Notes 20 to 26, wherein
the first server is an Edge Enabler Server (EES), a source EES, or a target EES,
each of the second server and the second alternative server is an Edge Application Server (EAS) or a target EAS, and
the requesting entity is an Edge Enabler Client (EEC) located in a User Equipment (UE), a source EAS, or a source EES.

### (Supplementary Note 30)

The requesting entity according to Supplementary Note 29, wherein the at least one selection criterion includes at least one of: a location of the UE, EAS discovery filters provided by the EEC, an operational status of the second server, or a load status of the second server.

### (Supplementary Note 31)

The requesting entity according to Supplementary Note 20, wherein
each of the first server and the first alternative server is an Edge Enabler Server (EES),
the second server is an Edge Application Server (EAS), and
the requesting entity is an Edge Enabler Client (EEC) located in a User Equipment (UE).

### (Supplementary Note 32)

The requesting entity according to Supplementary Note 31, wherein the at least one selection criterion includes at least one of: a security requirement, a location of the UE, at least one Application Client profile provided by the EEC, EAS discovery filters provided by the EEC, an operational status of the second server, or a load status of the second server.

### (Supplementary Note 33)

A method performed by a requesting entity, the method comprising:
sending to a first server a request for a connection to an entity providing a service in an edge data network;
receiving a response to the request from the first server; and
in a case where a second server that is located in the edge data network and that an attempt is made to identify based on at least one selection criterion cannot be identified, and if the response includes information about a second alternative server that is different from the second server or information about a first alternative server that substitutes for the first server for attempting to identify the second server, deciding whether to accept the information about the first alternative server or the information about the second alternative server for provision of the service.

### (Supplementary Note 34)

A program for causing a computer to perform a method for a requesting entity, wherein the method comprises:
sending to a first server a request for a connection to an entity providing a service in an edge data network;
receiving a response to the request from the first server; and
in a case where a second server that is located in the edge data network and that an attempt is made to identify based on at least one selection criterion cannot be identified, and if the response includes information about a second alternative server that is different from the second server or information about a first alternative server that substitutes for the first server for attempting to identify the second server, deciding whether to accept the information about the first alternative server or the information about the second alternative server for provision of the service.

This application is based upon and claims the benefit of priority from Japanese Patent Application No. 2021-023807, filed on February 17, 2021, the disclosure of which is incorporated herein in its entirety by reference.

### Reference Signs List

- 1: User Equipment (UE)
- 2: Edge Enabler Client (EEC)
- 3: Application client (AC)
- 4: Edge Data Network (EDN)
- 5: Edge Enabler Server (EES)
- 6: Edge Application Server (EAS)
- 7: Edge Configuration Server (ECS)
- 1103: Baseband Processor
- 1104: Application Processor
- 1106: Memory
- 1107: Modules
- 1202: Processor
- 1203: Memory
- 1204: Modules

## Claims

1. A first server comprising:
at least one memory; and
at least one processor coupled to the at least one memory and configured to:
in response to receiving from a requesting entity a request for a connection to an entity providing a service in an edge data network, attempt to identify a second server located in the edge data network based on at least one selection criterion; and
if the second server cannot be identified or is not available, identify a second alternative server that is different from the second server, or identify a first alternative server that substitutes for the first server for attempting to identify the second server.

2. The first server according to claim 1, wherein the at least one processor is configured to, upon identifying the second alternative server, send information about the second alternative server to the requesting entity.

3. The first server according to claim 1 or 2, wherein the second alternative server is a server that cannot meet part or all of the at least one selection criterion.

4. The first server according to any one of claims 1 to 3, wherein
the second server is a server located in the edge data network, which is a first Local Area Data Network (LADN), and
the second alternative server is a server located in a second LADN that includes a server that does not meet at least one of the at least one selection criterion.

5. The first server according to claim 4, wherein the at least one of the at least one selection criterion, which is not met, is a service area, a geographic area, a route, a topological area, or a maximum response time.

6. The first server according to claim 4 or 5, wherein the second alternative server is a server located in the second LADN that corresponds to a larger service area than that to which the first LADN corresponds.

7. The first server according to any one of claims 1 to 3, wherein
the second server is a server located in the edge data network, which is a Local Area Data Network (LADN), and
the second alternative server is a server located in a data network that is not a LADN.

8. The first server according to any one of claims 1 to 7, wherein
the request contains an indication that the requesting entity desires information about a second alternative server, can accept information about a second alternative server, or supports service provision using a second alternative server, and
the at least one processor is configured to determine, based on the indication, whether or not to send the information about the second alternative server to the requesting entity if the second server cannot be identified.

9. The first server according to claim 1 or 2, wherein the at least one processor is configured to, upon identifying the first alternative server, send information about the first alternative server to the requesting entity.

10. The first server according to claim 1 or 2, wherein the at least one processor is configured to, upon identifying the first alternative server, send information corresponding to the request to the first alternative server to cause the first alternative server to attempt to identify the second server.

11. The first server according to any one of claims 1 to 8, wherein
the first server is an Edge Configuration Server (ECS),
each of the second server and the second alternative server is an Edge Enabler Server (EES) or a target EES, and
the requesting entity is an Edge Enabler Client (EEC) located in a User Equipment (UE), or is a source EES.

12. The first server according to claim 11, wherein the at least one selection criterion includes at least one of: a location of the UE, at least one Application Client profile provided by the EEC, an operational status of the second server, or a load status of the second server.

13. The first server according to any one of claims 1 to 8, wherein
the first server is an Edge Enabler Server (EES), a source EES, or a target EES,
each of the second server and the second alternative server is an Edge Application Server (EAS) or a target EAS, and
the requesting entity is an Edge Enabler Client (EEC) located in a User Equipment (UE), is a source EAS, or is a source EES.

14. The first server according to claim 13, wherein the at least one selection criterion includes at least one of: a location of the UE, EAS discovery filters provided by the EEC, an operational status of the second server, or a load status of the second server.

15. The first server according to claim 1, wherein the at least one processor is configured to, if the second server cannot be identified, obtain information about the first alternative server from a third server that manages information about the first server.

16. The first server according to claim 1 or 15, wherein
each of the first server and the first alternative server is an Edge Enabler Server (EES),
the second server is an Edge Application Server (EAS), and
the requesting entity is an Edge Enabler Client (EEC) located in a User Equipment (UE).

17. The first server according to claim 16, wherein the at least one selection criterion includes at least one of: a security requirement, a location of the UE, at least one Application Client profile provided by the EEC, EAS discovery filters provided by the EEC, an operational status of the second server, or a load status of the second server.

18. A method performed by a first server, the method comprising:
in response to receiving from a requesting entity a request for a connection to an entity providing a service in an edge data network, attempting to identify a second server located in the edge data network based on at least one selection criterion; and
if the second server cannot be identified or is not available, identifying a second alternative server that is different from the second server, or identifying a first alternative server that substitutes for the first server for attempting to identify the second server.

19. A non-transitory computer readable medium storing a program for causing a computer to perform a method for a first server, wherein the method comprises:
in response to receiving from a requesting entity a request for a connection to an entity providing a service in an edge data network, attempting to identify a second server located in the edge data network based on at least one selection criterion; and
if the second server cannot be identified or is not available, identifying a second alternative server that is different from the second server, or identifying a first alternative server that substitutes for the first server for attempting to identify the second server.

20. A requesting entity comprising:
at least one memory; and
at least one processor coupled to the at least one memory and configured to:
send to a first server a request for a connection to an entity providing a service in an edge data network;
receive a response to the request from the first server; and
in a case where a second server that is located in the edge data network and that an attempt is made to identify based on at least one selection criterion cannot be identified, if the response includes information about a second alternative server that is different from the second server or information about a first alternative server that substitutes for the first server for attempting to identify the second server, decide whether to accept the information about the first alternative server or the information about the second alternative server for provision of the service.

21. The requesting entity according to claim 20, wherein the second alternative server is a server that cannot meet part or all of the at least one selection criterion.

22. The requesting entity according to claim 20 or 21, wherein
the second server is a server located in the edge data network, which is a first Local Area Data Network (LADN), and
the second alternative server is a server located in a second LADN that includes a server that does not meet at least one of the at least one selection criterion.

23. The requesting entity according to claim 22, wherein the at least one of the at least one selection criterion, which is not met, is a service area, a geographic area, a route, a topological area, or a maximum response time.

24. The requesting entity according to claim 22 or 23, wherein the second alternative server is a server located in the second LADN that corresponds to a larger service area than that to which the first LADN corresponds.

25. The requesting entity according to claim 20 or 21, wherein
the second server is a server located in the edge data network, which is a Local Area Data Network (LADN), and
the second alternative server is a server located in a data network that is not a LADN.

26. The requesting entity according to any one of claims 20 to 25, wherein the at least one processor is configured to include in the request an indication that the requesting entity desires information about a second alternative server, can accept information about a second alternative server, or supports service provision using a second alternative server.

27. The requesting entity according to any one of claims 20 to 26, wherein
the first server is an Edge Configuration Server (ECS),
each of the second server and the second alternative server is an Edge Enabler Server (EES) or a target EES, and
the requesting entity is an Edge Enabler Client (EEC) located in a User Equipment (UE), or is a source EES.

28. The requesting entity according to claim 27, wherein the at least one selection criterion includes at least one of: a location of the UE, at least one Application Client profile provided by the EEC, an operational status of the second server, or a load status of the second server.

29. The requesting entity according to any one of claims 20 to 26, wherein
the first server is an Edge Enabler Server (EES), a source EES, or a target EES,
each of the second server and the second alternative server is an Edge Application Server (EAS) or a target EAS, and
the requesting entity is an Edge Enabler Client (EEC) located in a User Equipment (UE), is a source EAS, or is a source EES.

30. The requesting entity according to claim 29, wherein the at least one selection criterion includes at least one of: a location of the UE, EAS discovery filters provided by the EEC, an operational status of the second server, or a load status of the second server.

31. The requesting entity according to claim 20, wherein
each of the first server and the first alternative server is an Edge Enabler Server (EES),
the second server is an Edge Application Server (EAS), and
the requesting entity is an Edge Enabler Client (EEC) located in a User Equipment (UE).

32. The requesting entity according to claim 31, wherein the at least one selection criterion includes at least one of: a security requirement, a location of the UE, at least one Application Client profile provided by the EEC, EAS discovery filters provided by the EEC, an operational status of the second server, or a load status of the second server.

33. A method performed by a requesting entity, the method comprising:
sending to a first server a request for a connection to an entity providing a service in an edge data network;
receiving a response to the request from the first server; and
in a case where a second server that is located in the edge data network and that an attempt is made to identify based on at least one selection criterion cannot be identified, and if the response includes information about a second alternative server that is different from the second server or information about a first alternative server that substitutes for the first server for attempting to identify the second server, deciding whether to accept the information about the first alternative server or the information about the second alternative server for provision of the service.

34. A non-transitory computer readable medium storing a program for causing a computer to perform a method for a requesting entity, wherein the method comprises:
sending to a first server a request for a connection to an entity providing a service in an edge data network;
receiving a response to the request from the first server; and
in a case where a second server that is located in the edge data network and that an attempt is made to identify based on at least one selection criterion cannot be identified, and if the response includes information about a second alternative server that is different from the second server or information about a first alternative server that substitutes for the first server for attempting to identify the second server, deciding whether to accept the information about the first alternative server or the information about the second alternative server for provision of the service.
